# EUROPÄISCHE PATENTSCHRIFT

(11) **EP 1 459 422 B1**
(45) Veröffentlichungstag und Bekanntmachung des Hinweises auf die Patenterteilung: **09.11.2005**
(21) Anmeldenummer: 02791869.7
(22) Anmeldetag: 27.12.2002
(51) Int. Cl.: H02K 1/02, H02K 1/06, H02K 9/19

(54) **DAUERMAGNETISCH ERREGTE, ELEKTRISCHE MASCHINE**
PERMANENT-MAGNETICALLY EXCITED ELECTRICAL MOTOR
MACHINE ELECTRIQUE A EXCITATION PAR AIMANT PERMANENT

(30) Priorität: 28.12.2001 DE 10164290
(43) Veröffentlichungstag der Anmeldung: 22.09.2004
(73) Patentinhaber: Magnet-Motor Gesellschaft für magnetmotorische Technik mbH, D-82319 Starnberg (DE)
(72) Erfinder: EHRHART, Peter, 81375 München (DE)
(74) Vertreter: Klunker . Schmitt-Nilson . Hirsch
(86) Internationale Anmeldenummer: PCT/EP2002/014779
(87) Internationale Veröffentlichungsnummer: WO 2003/056685

(56) Entgegenhaltungen:
- BE-A- 379 475
- US-A- 4 398 108
- US-A- 5 486 728
- PATENT ABSTRACTS OF JAPAN vol. 017, no. 494 (E-1428), 7. September 1993 (1993-09-07) -& JP 05 122904 A (FUJI ELECTRIC CO LTD), 18. Mai 1993 (1993-05-18)
- PATENT ABSTRACTS OF JAPAN vol. 012, no. 030 (E-578), 28. Januar 1988 (1988-01-28) -& JP 62 185544 A (SHIN MEIWA IND CO LTD), 13. August 1987 (1987-08-13)

## Beschreibung

Die Erfindung bezieht sich auf eine dauermagnetisch erregte, elektrische Maschine, mit einem Statorteil und einem Läuferteil, das relativ zu dem Statorteil bewegbar ist, und mit einem Luftspalt zwischen dem Statorteil und dem Läuferteil, wobei eines der Teile Statorteil und Läuferteil eine Flusspfadanordnung für magnetischen Fluss und Wicklungsspulen aufweist und das andere der Teile Statorteil und Läuferteil eine Flusspfadanordnung für magnetischen Fluss und Dauermagnete aufweist.

Die erfindungsgemäße elektrische Maschine kann ein Elektromotor oder ein Generator zur Stromerzeugung oder auch eine Kombination aus beiden sein, die wahlweise als Motor oder als Generator arbeitet. Im Folgenden wird vorwiegend auf Elektromotoren Bezug genommen, aber alle Ausführungen gelten analog für Generatoren.

Die erfindungsgemäße elektrische Maschine kann eine rotatorische oder eine lineare Maschine sein. Im Folgenden wird vorwiegend auf rotatorische Maschinen Bezug genommen ("Rotorteil" statt "Läuferteil"), aber alle Ausführungen gelten analog auch für lineare Maschinen.

Die erfindungsgemäße elektrische Maschine ist vorzugsweise elektronisch kommutiert, d.h. sie weist elektronische Bausteine auf, mit denen sich den Wicklungsspulen für eine jeweilige geeignete Zeitphase Strom zuführen lässt (Elektromotor) oder mit denen sich aus den Wicklungsspulen zu jeweiligen geeigneten Zeitphasen Strom ableiten lässt. Im Folgenden wird überwiegend auf elektronisch kommunierte Maschinen Bezug genommen, aber viele der Ausführungen gelten analog auch für Maschinen, die nicht elektronisch kommutiert sind.

Bei der erfindungsgemäßen elektrischen Maschine gibt es die zwei folgenden grundsätzlichen Möglichkeiten der Auslegung: Entweder ist der Statorteil mit den Wicklungsspulen versehen und der Läuferteil mit den Dauermagneten versehen; diese Auslegung hat den Vorteil, dass man dem Läuferteil keinen Strom für die Wicklungsspulen zuführen bzw. aus den Wicklungsspulen abführen muss. Umgekehrt kann man aber auch den Statorteil mit den Dauermagneten versehen und den Läuferteil mit den Wicklungsspulen versehen.

Bei dauermagnetisch erregten, rotatorischen Elektromotoren wird den Wicklungsspulen jeweils für "richtige" Zeitphasen und jeweils mit "richtigem" Vorzeichen elektrischer Strom zugeführt. Sobald sich jedoch der Rotor dreht, induzieren die (z.B. auf dem Rotor positionierten) Dauermagnete in den (z.B. auf dem Stator positionierten) Wicklungsspulen eine Spannung; diese induzierte Spannung wird normalerweise kurz EMK genannt. Im Prinzip steigt die EMK mit der Drehzahl des Rotors linear an. Dies liegt daran, dass die Amplitude und der stellungsabhängige Verlauf des dauermagnetischen Flusses, der die Wicklungsspulen durchsetzt, konstant ist, aber dessen zeitliche Änderungsgeschwindigkeit mit der Drehzahl verändert wird. Eine wesentliche Verbesserung des aus Maschine und zugeordneter Leistungselektronik bestehenden Gesamtsystems würde sich jedoch dadurch ergeben, könnte man die induzierte Spannung bei gegebener Drehzahl beeinflussen, insbesondere in Richtung auf hohe Drehzahlen den Anstieg reduzieren und im Idealfall eine konstante Spannung über den gesamten Drehzahlbereich realisieren.

Es hat bisher schon Ansätze gegeben, die Höhe der in den Wicklungsspulen induzierten Spannung zu beeinflussen. Man kennt Eingriffe mit mechanischen Mitteln, z.B. Unterteilung des Stators in zwei relativ zueinander verdrehbare Statorteile, wobei deren zugeordnete Spulen seriell geschaltet sind; Unterteilung des Rotors in zwei relativ zueinander verdrehbare Rotorteile; axiale Verschiebung des Rotors relativ zu dem Stator. Und man kennt elektrische Eingriffe, z.B. Serienschaltung zweier zugeordneter Statorspulen mittels elektrischem Phasenschieber; aktive Verschiebung des Phasenwinkels zwischen Strom und induzierter Spannung durch Veränderung des Kommutierungszeitpunkts in der zugeordneten Leistungselektronik (Ausnutzung des induktiven Spannungsabfalls); Veränderung der Serien-/Parallelverschaltung von Wicklungsspulen.

Die meisten der bekannten Maßnahmen sind sehr aufwendig und führen nur unter Inkaufnahme von Nachteilen an anderer Stelle zu Teilergebnissen.

Die BE-A-379475, US-A-4398108 und JP-A-05122904 beschreiben jeweils eine dauermagnetisch erregte, elektrische Maschine entsprechend dem Oberbegriff des Anspruchs 1.

Das genannte technische Problem ist durch die dauermagnetisch erregte, elektrische Maschine mit den Merkmalen des Anspruchs 1 gelöst.

Die Flussleitflüssigkeit ist im einfachsten Fall eine Flüssigkeit, die mit magnetisch leitfähigen Teilchen, z.B. Eisenpulvermaterial beladen ist, wobei chemische Zusätze vorhanden sind, um die leitfähigen Teilchen in Schwebe zu halten, so dass eine auf Dauer stabile Flussleitflüssigkeit vorliegt. Flussleitflüssigkeiten sind an sich bekannt und sind am Markt erhältlich, z.B. von der Firma Ferrofluidics GmbH, Nürtingen, Deutschland.

Wenn die Menge der Flussleitflüssigkeit in dem Füllraum verringert wird, wird dort die magnetische Flussleitfähigkeit verringert. Als Folge wird die Amplitude des magnetischen Flusses durch die Wicklungsspulen verringert, wodurch die dort induzierte Spannung abnimmt. In den meisten praktischen Fällen wird man also bei hoher Drehzahl der Maschine die Menge der Flussleitflüssigkeit in dem Füllraum verringern und bei niedriger Drehzahl erhöhen.

Vorzugsweise weist die Versorgung des Füllraums mit mehr oder weniger Flussleitflüssigkeit das Arbeiten mit einer, insbesondere geringeren, Anzahl diskreter Füllungszustände des Füllraums auf, vorzugsweise mindestens des Füllungszustands "voll" und des Füllungszustands "leer". In der Praxis ist sogar das Arbeiten nur mit den beiden Füllungszuständen "voll" und "leer" häufig besonders bevorzugt. Bei dieser Ausführungsform lassen sich die Einrichtungen zur Änderung des Füllungszustands technisch besonders einfach ausbilden. Man hat zwar im mittleren Drehzahlbereich nicht die optimale Anpassung, aber wenigstens im besonders wichtigen Bereich hoher Drehzahlen eine auslegungsgemäß volle Absenkung der induzierten EMK.

Alternativ bevorzugt ist es, wenn die Versorgung des Füllraums mit mehr oder weniger Flussleitflüssigkeit das Nutzen eines kontinuierlichen Bereichs von Füllungszuständen des Füllraums aufweist, vorzugsweise einsohließlich des End-Füllungszustands "voll" und des End-Füllungszustands "leer". Diese Ausführung ermöglicht ein feinfühliges Anpassen der magnetischen Flussleitflüssigkeit der Flusspfadanordnung an die Drehzahl der Maschine, allerdings um den Preis eines größeren Aufwands für die technische Realisierung. Der Begriff "kontinuierlich" soll nicht bedeuten, dass jeder beliebige Füllungszustand auch tatsächlich benutzt wird. Es soll lediglich zum Ausdruck gebracht werden, dass mit einer relativ großen Anzahl von relativ nahe beieinander liegenden Füllungszuständen gearbeitet wird.

Vorzugsweise sind bei der mit Wicklungsspulen versehenen Flusspfadanordnung Unterbrechungen der Flusspfadanordnung als Füllräume vorgesehen. Bei leeren Füllräumen hat man maximale Verringerung der magnetischen Flussleitfähigkeit der Flusspfadanordnung.

Vorzugsweise sind bei der mit Wicklungsspulen versehenen Flusspfadanordnung örtliche Ausnehmungen des magnetischen Flussquerschnitts als Füllräume vorgesehen. Diese Ausführung ist häufig technisch einfacher zu realisieren als die im vorhergehenden Absatz beschriebene. Bei geeigneter Größe der Ausnehmungen (d.h. Tiefe oder Breite, gemessen quer zur dortigen Längsrichtung des Flusspfads, oder Breite, gemessen in der dortigen Längsrichtung des Flusspfads) lassen sich unschwer die gewünschten Verringerungen der magnetischen Flussleitfähigkeit der Flusspfadanordnung erreichen.

Vorzugsweise sind bei der mit Wicklungsspulen versehenen Flusspfadanordnung eine unterdimensionierte Feststoff-Flusspfadanordnung und mindestens ein Füllraum zum großflächigen Hochdimensionieren der Flusspfadanordnung vorgesehen. Als konkrete Ausführung sei beispielhaft die Möglichkeit genannt, einen Magnetflussquerschnitt aus Eisen durch einen angrenzend parallel dazu verlaufenden Füllraum im Gesamt-Magnetflussquerschnitt wesentlich zu erhöhen (wenn mit Flussleitflüssigkeit gefüllt) oder nicht (wenn nicht mit Flussleitflüssigkeit gefüllt). Das Wort "großflächig" soll zum Ausdruck bringen, dass nicht nur an einzelnen Stellen (wie bei den zuvor angesprochenen Unterbrechungen oder Ausnehmungen) die magnetische Flussleitflüssigkeit lokal geändert werden kann, sondern dass sich diese Änderung entweder über die gesamt Flusspfadanordnung oder zumindest über einen erheblichen Teilabschnitt der Flusspfadanordnung erstreckt.

Anstatt an der mit Wicklungsspulen versehenen Flusspfadanordnung, oder zusätzlich zu dieser, kann die erfindungsgemäße Änderbarkeit der magnetischen Flussleitflüssigkeit an der mit Dauermagneten versehenen Flusspfadanordnung (dies ist vorzugsweise am Läuferteil bzw. am Rotorteil) vorgenommen sein: Vorzugsweise sind bei der mit Dauermagneten versehenen Flusspfadanordnung Unterbrechungen der Flusspfadanordnung als Füllräume vorgesehen. Im Fall von in Umfangsrichtung magnetisierten Dauermagneten und Flussleitelementen jeweils zwischen zwei benachbarten Dauermagneten kann dies vorzugsweise dazu führen, dass Abstandsräume zwischen Dauermagneten und Flussleitelementen als Füllräume vorgesehen sind.

Vorzugsweise sind bei der mit Dauermagneten versehenen Flusspfadanordnung örtliche Ausnehmungen des magnetischen Flussquerschnitts als Füllräume vorgesehen.

Vorzugsweise ist bei der mit Dauermagneten versehenen Flusspfadanordnung eine unterdimensionierte Feststoff-Flusspfadanordnung und mindestens ein Füllraum zum großflächigen Hochdimensionieren der Flusspfadanordnung vorgesehen.

Die Ausführungen, die weiter vorn zu bevorzugten Ausführungen an der mit Wicklungsspulen versehenen Flusspfadanordnung gemacht worden sind, gelten analog hier auch für die mit Dauermagneten versehenen Flusspfadanordnungen.

Im Fall von in Umfangsrichtung magnetisierten Dauermagneten und Flussleitelementen jeweils zwischen zwei benachbarten Dauermagneten gibt es ferner eine bevorzugte Ausführung, bei der an der luftspaltabgewandten Seite der Dauermagnete und der Flussleitelemente mindestens ein Füllraum zur wahlweisen Schaffung von magnetischem Nebenschluss vorgesehen ist. Der magnetische Nebenschluss bewirkt einen anderen Arbeitspunkt der Dauermagnete mit anderer Aufteilung der Magnetflüsse, was sich als niedrigere Luftspaltfeldstärke auswirkt. Im Ergebnis ergibt sich auch hier eine Erniedrigung der in den Wicklungsspulen induzierten Spannung, allerdings in diesem Fall bei einer Vermehrung der Flussleitflüssigkeit in dem Füllraum.

Eine technisch besonders unkomplizierte Ausführung ergibt sich häufig, wenn - wie bevorzugt - der Füllraum an einen Kreislauf der Flussleitflüssigkeit angeschlossen ist. Bei dieser Ausführung lässt sich die in dem Füllraum vorhandene Luft bei Vermehrung der Flussleitflüssigkeit in dem Füllraum leicht aus diesem herausdrücken. Beim Verringern des Füllungszustands des Füllraums kann man für die Möglichkeit des Nachströmens von Luft in den Füllraum sorgen.

Wenn der Läuferteil mindestens einen Füllraum aufweist, ist es bevorzugt, dass an dem Läuferteil eine Pumpe zum Fördern der Flussleitflüssigkeit angeordnet ist oder in ihm integriert ist. Alternativ kann man die Pumpe zum Fördern der Flussleitflüssigkeit separat von dem Läuferteil anordnen und über mindestens eine Durchführung, die Relativbewegung erlaubt, mit dem Füllraum verbinden. Die erstgenannte Möglichkeit ist in der Regel mechanisch einfacher, erhöht aber das Gewicht und das Volumen des Läuferteils. In aller Regel gehört zu dem Flussleitflüssigkeitssystem ein Reservoir, aus dem bei Vergrößerung der Menge der Flüssigkeit in dem Füllraum Flüssigkeit entnommen wird und in das bei Verringerung der Flüssigkeitsmenge in dem Füllraum Flüssigkeit zurückbefördert wird.

Es ist bevorzugt, die Erhöhung oder Verringerung der Menge der Flussleitflüssigkeit in dem Füllraum automatisiert vorzunehmen, z.B. nach Art eines Regelkreises in Abhängigkeit von der Drehzahl der Maschine. Dabei wird es in aller Regel nicht besonders praktisch sein, auf jede kleine Drehzahländerung sofort mit einer Änderung der Flüssigkeitsmenge in dem Füllraum zu reagieren. In aller Regel reicht es zu reagieren, wenn sich die Drehzahl um einen erheblichen Wert und/oder beständig für längere Zeit geändert hat.

Im Fall einer Maschine mit Außenrotor, bei der die Flussleitflüssigkeit zur Schaffung eines magnetischen Nebenschlusses dient, kann die mit höherer Drehzahl einhergehende automatische Befüllung des Füllraums mit Flussleitflüssigkeit infolge der Fliehkraft ausgenutzt werden.

Vorzugsweise sind der Füllraum und die Flussleitflüssigkeit zugleich Bestandteil eines Kühlsystems der Maschine. Das Kühlsystem der Maschine kann im Wesentlichen ausschließlich mit der Flussleitflüssigkeit arbeiten, aber auch Kombinationen mit einem anderen, flüssigen oder gasförmigen Kühlmedium sind möglich. Die Erfindung schafft jedoch die Möglichkeit, eine sowieso für die erfindungsgemäße Funktion vorhandene Flüssigkeit, nämlich die Flussleitflüssigkeit, zugleich auch für Kühlaufgaben einzusetzen. In diesem Fall wird man vorzugsweise ein Ausmaß der Umwälzung der Flussleitflüssigkeit vorsehen, das über das für die Änderung der magnetischen Flussleitfähigkeit der Flusspfadanordnung erforderliche Ausmaß hinausgeht. Wenn die Flussleitflüssigkeit zugleich auch Kühlungsfunktion erfüllt, muss sie in der Regel rückgekühlt werden, z.B. mittels Wärmetauscher und eines sekundären Kühlflüssigkeitskreislaufs oder mittels eines Wärmetauschers an Luft.

Die erfindungsgemäße Maschine kann, wenn man den Fall der rotatorischen Maschine betrachtet, entweder mit einem Innenrotor oder mit einem Außenrotor ausgeführt sein. Diese beiden Ausführungen sind Maschinen mit einem zylindrischen Luftspalt. Alternativ sind rotatorische Maschinen mit ebenem Luftspalt möglich, bei der sich Statorteil und Rotorteil mit axialem Abstand gegenüberstehen.

Die erfindungsgemäße elektrische Maschine kann nach dem Prinzip der Flusskonzentration aufgebaut sein, bei der im Luftspalt eine höhere magnetische Feldstärke herrscht als an der Austrittsfläche der Dauermagneten. Für detailliertere Ausführungen zum Flusskonzentrationsprinzip wird auf EP 0 331 180 A hingewiesen. Dort und weiter unten in der vorliegenden Anmeldung sind auch konkrete Ausführungsbeispiele für elektrische Maschinen nach dem Flusskonzentrationsprinzip beschrieben.

Die Erfindung und Ausgestaltungen der Erfindung werden nachfolgend anhand von schematisiert zeichnerisch dargestellten Ausführungsbeispielen noch näher erläutert. Es zeigt:
- Fig. 1: einen in die Ebene abgewickelten Querschnitt eines Teilbereichs eines Statorteils einer elektrischen Maschine;
- Fig. 2: einen in die Ebene abgewickelten Querschnitt eines Teilbereichs eines Stators einer elektrischen Maschine, in anderer Ausführungsform;
- Fig. 3: einen in die Ebene abgewickelten Teilbereich eines Querschnitts einer elektrischen Maschine, in anderer Ausführungsform, wobei ein Statorteil und ein Rotorteil zu sehen sind;
- Fig. 4: einen in die Ebene abgewickelten Teilbereich eines Querschnitts einer elektrischen Maschine, in anderer Ausführungsform, wobei sowohl ein Statorteil als auch ein Rotorteil zu sehen sind;
- Fig. 5: einen in die Ebene abgewickelten Teilbereich eines Querschnitts einer elektrischen Maschine, in anderer Ausführung, wobei ein Statorteil und ein Rotorteil zu sehen sind;
- Fig. 6: stark schematisiert, einen Längsschnitt eines Teils einer elektrischen Maschine.

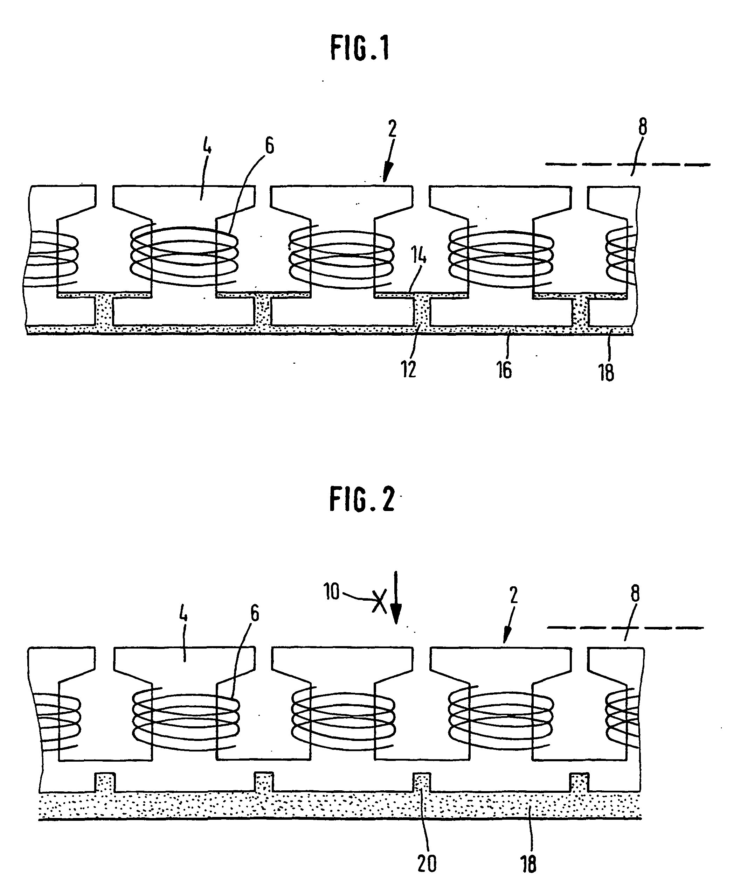

Bei den in den Figuren 1 bis 5 dargestellten elektrischen Maschinen handelt es sich um rotatorische Maschinen, bei denen der Statorteil die Wicklungsspulen aufweist und der Rotorteil die Dauermagnete aufweist. Deshalb wird von Rotorteil statt allgemeiner von Läuferteil gesprochen. Analoge Linearmaschinen kann man sich sofort vorstellen, wenn man die Figuren 1 bis 5 nicht als Abwicklung, sondern als Längsschnitt eines Teilbereichs der Linearmaschine ansieht. Wie aus Ausführungen weiter unten noch deutlicher werden wird, handelt es sich bei den Ausführungsbeispielen gemäß Figuren 1 bis 5 durchweg um Maschinen mit zylindrischem Luftspalt. Wenn man sich eine andere Abwicklungsrichtung vorstellt, kann man die Zeichnungsfiguren auch als Maschinen mit ebenem Luftspalt auffassen. Die Darstellungen der Figuren 1 bis 5 sind unabhängig davon, ob man einen Elektromotor oder einen Stromgenerator vor sich hat. In der folgenden Beschreibung wird der Begriff Maschine verwendet, aber es wird hier darauf hingewiesen, dass die jeweilige dargestellte Ausführungsform wahlweise ein Motor oder ein Generator sein kann.

Der in Fig. 1 gezeichnete Teilbereich eines Statorteils 2 hat drei Statorpole 4, jeweils versehen mit einer Wicklungsspule 6. Mit unterbrochener Linie ist angedeutet, wo man sich einen Luftspalt 8 der Maschine vorzustellen hat. Wenn man sich den Statorteil 2 um eine Achse 10 ringförmig gekrümmt vorstellt, (die, wie mit dem Pfeil angedeutet, in Wirklichkeit sich wesentlich weiter unten auf der Zeichnungsseite befindet), nimmt der Luftspalt 8 eine zylindrische Konfiguration an; die für die zeichnerische Darstellung vorgenommene Abwicklung in die Ebene wäre gleichsam rückgängig gemacht. Wenn man sich hingegen die Achse 10 um 90° gekippt in die Zeichnungsebene, von oben nach unten verlaufend, und dann nach vorn oder nach hinten parallel aus der Zeichnungsebene heraus verschoben vorstellt, dann erzeugt man bei zylindrischer Krümmung um diese Achse herum einen Stator, bei dem die freien Enden der Statorpole 4 einen in einer Ebene liegenden Ring bilden und der Luftspalt 8 ein ebener Luftspalt ist.

Man sieht, dass die Statorpole 4 an ihrer luftspaltentfernten Seite nicht ineinander übergehen (was einen konventionellen dortigen Magnetrückschluss ergäbe), sondern dass jeweils zwischen zwei benachbarten Statorpolen 4 dort eine Unterbrechung 12 vorhanden ist. Das, was in der bisherigen Beschreibung als Flusspfadanordnung (des Statorteils) bezeichnet worden ist, ist bei dem Ausführungsbeispiel der Fig. 1 die Aneinanderreihung von U-förmigen Eisenpfaden, wobei jeweils beim waagerechten Schenkel des U eine Unterbrechung 12 vorhanden ist.

Man sieht, dass bei jeder Unterbrechung 12 das dem Luftspalt 8 zugewandte bzw. der Wicklungsnut zwischen zwei benachbarten Statorpolen 4 zugewandte Ende durch eine Abdichtungswand 14 flüssigkeitsdicht abgeschlossen ist. Das Gleiche gilt für das hinter der Zeichnungsebene liegende Ende und für das vor der Zeichnungsebene liegende Ende der Unterbrechung 12.

Alle Unterbrechungen 12 sind durch einen Flüssigkeitskanal 16 verbunden, der längs der Reihe der Statorpole 4 auf deren luftspaltabgewandten Seite verläuft. Es wird darauf hingewiesen, dass der Flüssigkeitskanal 16, gemessen rechtwinklig zur Zeichnungsebene, im Wesentlichen so breit wie die Statorpole 4 sein kann. In diesem Fall stellt er selbst einen "Füllraum" oder einen "Bestandteil des Gesamt-Füllraums" im Sinne der Erfindung dar. Alternativ kann der Flüssigkeitskanal 16, gemessen rechtwinklig zur Zeichnungsebene, eine relativ geringe Breite haben; in diesem Fall hat er im Wesentlichen nur die Funktion, Flüssigkeit wahlweise zu den Unterbrechungen 12 zu fördern oder von den Unterbrechungen 12 abzuziehen. Eine weitere, sogar besonders bevorzugte Alternative besteht darin, sowohl an der vor der Zeichnungsebene liegenden Stirnseite der Statorpole 4 als auch an der hinter der Zeichnungsebene liegenden, anderen Stirnseite der Statorpole 4 jeweils einen Flüssigkeitskanal 16 vorzusehen. Bei dieser Ausführung kann man durch einen der Kanäle 16 Flüssigkeit den Unterbrechungen 12 zuführen und durch den anderen der beiden Kanäle 16 Flüssigkeit von den Unterbrechungen 12 abziehen. Die Einbindung in einen Flüssigkeitskreislauf, die Abführung von Luft aus den Unterbrechungen 12, das Nachspeisen von Luft in die Unterbrechungen 12, und anderes mehr gestalten sich besonders einfach.

Die in den Unterbrechungen 12 und in dem Kanal 16 durch Punktierung gezeichnete Flüssigkeit ist eine magnetisch leitende Flussleitflüssigkeit. Im Folgenden wird aus Verkürzungszwecken durchweg von "Flüssigkeit" statt von "Flussleitflüssigkeit" gesprochen.

Wenn, wie gezeichnet, die Unterbrechungen vollständig mit Flüssigkeit 18 gefüllt sind, hat man einen Zustand nicht sehr unterschiedlich davon, dass sich in den flüssigkeitsgefüllten Bereichen Statoreisen befindet (im Detail abhängig von der Leitfähigkeit der Flüssigkeit für Magnetfluss). Wenn man hingegen die Flüssigkeit 18 vollständig aus den Unterbrechungen 12 und dem Kanal 16 abzieht, hat man einen Zustand mit jeweils zwischen zwei benachbarten Statorpolen 4 unterbrochenem Flusspfad und damit eine sehr erhebliche Verringerung der in den Wicklungsspulen 6 durch die Dauermagnete auf dem bewegten Rotorteil induzierten EMK. Zwischenwerte durch teilweise gefüllte Unterbrechungen 12 sind möglich. Jede Unterbrechung 12 stellt einen "Füllraum" (oder in anderer Betrachtungsweise, einen Teil eines Gesamt-Füllraums) im Sinne der Erfindung dar.

Die zweite Ausführungsform gemäß Fig. 2 unterscheidet sich von der ersten Ausführungsform gemäß Fig. 1 lediglich dadurch, dass statt der Unterbrechungen 12 Ausnehmungen 20 an der luftspaltabgewandten Seite der Flusspfadanordnung vorhanden sind. Die einzelnen Statorpole 4 hängen über das die Ausnehmungen 20 überbrückende Statoreisen körperlich zusammen. Eine Abdichtung wie bei den Unterbrechungen 12 durch die Wand 14 ist nicht erforderlich. Wenn man die Ausnehmungen 20 gleichsam zum Ausgleich breiter (gemessen von links nach rechts in Fig. 2 und damit gemessen in Längsrichtung des Flusspfads) macht als die Unterbrechungen 12, lässt sich eine entsprechende Verringerung der magnetischen Flussleitfähigkeit der Flusspfadanordnung erreichen.

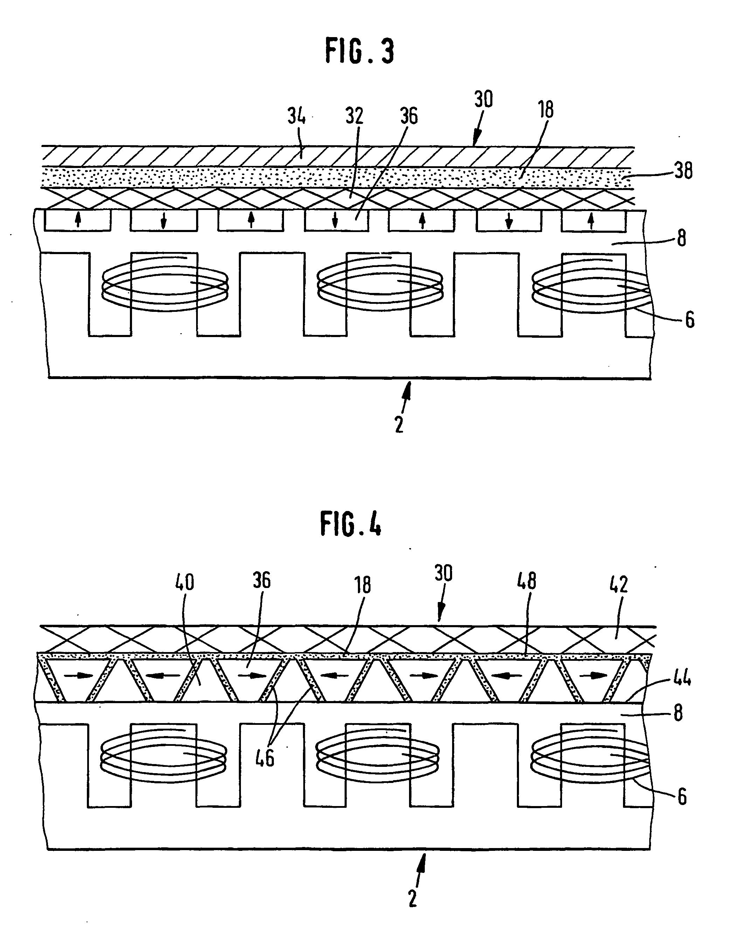

Bei der dritten Ausführungsform gemäß Fig. 3 ist die Variierbarkeit der magnetischen Flussleitfähigkeit bei der Flusspfadanordnung eines Rotorteils 30 vorgesehen. Der Statorteil 2 ist im Grundsatz ähnlich wie bei der ersten und bei der zweiten Ausführungsform ausgebildet, allerdings mit Wicklungsspulen 6 nur auf jedem zweiten Statorpol 4 und ohne Polkopfverbreiterung und ohne Füllraum bzw. Füllräume für Flussleitflüssigkeit am Statorteil 2.

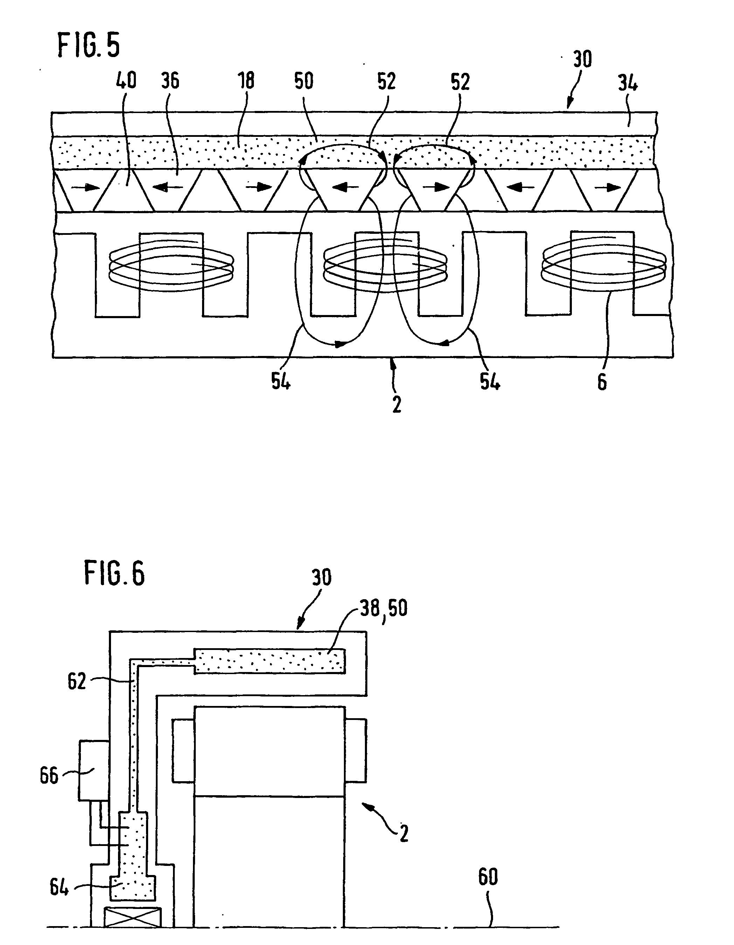

Der Rotorteil 30 ist im Wesentlichen becherförmig (insoweit am besten veranschaulicht durch Fig. 6), wobei der in Fig. 3 sichtbare, abgewickelt-zylindrische Teilbereich im Wesentlichen aus einer Eisenhülse 32, einer außen mit Abstand herumgelegten Außenwand 34, einem zylindrischen Füllraum 38 zwischen der Eisenhülse 32 und der Wand 34, und innen an der Eisenhülse 32 angebrachten Dauermagneten 36 besteht. Beim Fortschreiten in der Reihe der Dauermagneten 36 wechselt deren Polung ab. Abwechselnd weist ein Nordpol zum Luftspalt 8 und ein Südpol zum Luftspalt 8. In Umfangsrichtung benachbarte Dauermagnete 36 sind magnetisch durch einen Magnetrückschluss verbunden, welcher durch die Eisenhülse geliefert wird. Die Eisenhülse 32, versehen mit den Dauermagneten 36, bildet eine Flusspfadanordnung des Rotorteils 30. Im Extremfall kann die Eisenhülse in Radialrichtung sehr dünn sein, sogar fehlen.

Wenn der Füllraum 38 zwischen der Eisenhülse 32 und der Wand 34 mit Flussleitflüssigkeit 18 gefüllt ist, ist die magnetische Flussleitfähigkeit der beschriebenen Flusspfadanordnung größer als wenn der Füllraum 38 keine Flüssigkeit 18 enthält, weil zusammen mit der Flüssigkeit 18 effektiv der Magnetflussquerschnitt der Flusspfadanordnung vergrößert ist. Guten Sinn macht die dritte Ausführungsform, wenn die Eisenhülse 32 eine unterdimensionierte Flusspfadanordnung darstellt, die bei niedrigen Drehzahlen durch die Flüssigkeit 18 hochdimensioniert wird.

Es wird darauf hingewiesen, dass eine Ausführung wie die dritte Ausführungsform auch am Statorteil verwirklichbar ist. Man möge sich in Fig. 2 die Ausnehmungen 20 mit Eisen geschlossen vorstellen, aber das Statoreisen an der luftspaltabgewandten Seite in Radialrichtung insgesamt so dünn gemacht, dass eine Unterdimensionierung der Flusspfadanordnung vorliegt.

Andererseits kann man die erste Ausführungsform und die zweite Ausführungsform auch beim Rotorteil 30 verwirklichen. Zu diesem Zweck möge man sich in Fig. 3 entweder Unterbrechungen in der Eisenhülse 32 oder Ausnehmungen radial außen an der Eisenhülse 32, jeweils zwischen zwei benachbarten Dauermagneten 36, vorstellen.

Die vierte Ausführungsform gemäß Fig. 4 unterscheidet sich von der dritten Ausführungsform einerseits darin, dass statt der Eisenhülse 32 und der radial magnetisierten Dauermagnete 36 eine - wenn man sich von links nach rechts in Fig. 4 bzw. in Umfangsrichtung der Maschine bewegt - wechselnde Abfolge von in Umfangsrichtung magnetisierten Dauermagneten 36 und Flussleitelementen 40 vorgesehen ist. Umfangsmäßig benachbarte Dauermagnete 36 sind gegensinnig magnetisiert. Die Dauermagnete 36 sind im Querschnitt der Fig. 4 trapezförmig mit der kurzen Grundseite dem Luftspalt 8 zugewandt; die Flussleitelemente 40 sind im Schnitt der Fig. 4 trapezförmig mit der längeren Grundseite dem Luftspalt 8 zugewandt. Radial außerhalb der Anordnung von Dauermagneten 36 und Flussleitelementen 40 befindet sich eine Außenwand 42, welche die Dauermagnete 36 und die Flussleitelemente 40 trägt. Radial innen befindet sich eine Abdichtungswand 44.

Jeweils zwischen einem Dauermagneten 36 und seinen zwei in Umfangsrichtung benachbarten Flussleitelementen 40 befindet sich ein Abstandsspalt 46. Radial außen von der Anordnung der Dauermagnete 36 und der Flussleitelemente 40 ist bis zu der Außenwand 42 ein radial möglichst dünner Abstandsspalt 48 vorhanden, der lediglich zum Transport der Flüssigkeit 18 dient. Bevorzugt ist aber eine Ausführung ohne diesen Abstandsspalt 48, insbesondere mit Zufuhr und Abfuhr der Flüssigkeit 18 in axialer Richtung. Die Abstandsspalte 46 bilden zusammen einen Füllraum für Flussleitflüssigkeit 18. Wenn der Füllraum leer von Flüssigkeit 18 ist, bilden die Abstandsspalte 46 lokale Unterbrechungen der Flusspfadanordnung des Rotorteils 30. Wenn die Abstandsspalte 46 mit Flüssigkeit 18 gefüllt sind, hat man eine Flusspfadanordnung mit hoher magnetischer Flussleitfähigkeit.

Die fünfte Ausführungsform gemäß Fig. 5 unterscheidet sich von der vierten Ausführungsform dadurch, dass jeweils zwischen einem Dauermagneten 36 und seinen zwei benachbarten Flussleitelementen 40 kein Abstandsspalt 46 vorhanden ist. Der fakultative Abstandsspalt 48 ist zu einem Füllraum 50 großer radialer Dicke erweitert.

Durch diese Änderung hat sich die Funktion der Maschine verändert. Da keine Abstandsspalte 46 vorhanden sind, ist die Flusspfadanordnung des Rotorteils 30 auch ohne Flüssigkeit nicht unterdimensioniert. Wenn der Füllraum 50 mit Flüssigkeit 18 gefüllt ist, hat man über die Flüssigkeit 18 magnetische Nebenschlüsse zwischen benachbarten Flussleitelementen 40. Dadurch verschiebt sich der Arbeitspunkt der Dauermagnete 36 mit anderer Aufteilung der Flüsse, was sich als niedrigere Luftspaltfeldstärke auswirkt. Im Ergebnis ergibt sich eine Erniedrigung der in den Wicklungsspulen 6 induzierten Spannung. Die geschilderten Nebenschlüsse sind mit den gepfeilten Linien 52 angedeutet. Die gepfeilten Linien 54 geben die "regulären" Magnetkreise über den Luftspalt 8 zum Statorteil 2 und zurück wieder.

Durch Fig. 6 ist veranschaulicht, wie man sich ein kompletteres Flussleitflüssigkeit-System z.B. bei einer Füllraumkonfiguration wie in Fig. 3 oder in Fig. 5 vorstellen kann. Der Füllraum 38 bzw. 50 ist über einen Kanal 62 an ein Flüssigkeitsreservoir 64 (mit teilweisem Gasvolumen in dem Reservoir 64) angeschlossen. Wenn mehr Flüssigkeit 18 im Füllraum 38 bzw. 50 gewünscht wird, wird diese aus dem Reservoir 64 über den Kanal 62 dorthin geführt, und umgekehrt bei Wunsch nach geringerem Füllungszustand im Füllraum. Infolge der Fliehkraft breitet sich die Flüssigkeit 18 im Füllraum als radial äußere Schicht aus. Wenn abgefordert, kann der Füllraum 38 bzw. 50 vollständig mit Flüssigkeit 18 angefüllt werden.

In der Praxis ist es gut, zusätzlich an der in Fig. 6 rechten, axialen Stirnseite des Füllraums 38 bzw. 50 einen weiteren Flüssigkeitskanal anzuschließen und ein Kreislaufsystem für die Flüssigkeit 18 auszubilden, vorzugsweise mit einer Pumpe. Dann kann man z.B. von der in Fig. 6 linken Stirnseite her Flüssigkeit einpumpen oder auch Luft, nach Umschalten der Pumpe auf andere Ansaugöffnung. Einpumpen von Flüssigkeit 18 vergrößert den Füllungszustand des Füllraums, Einpumpen von Luft verkleinert ihn. Der Abfluss von Flüssigkeit oder Luft erfolgt auf der in Fig. 6 rechten Stirnseite des Rotorteils 30.

Fig. 6 ist auch ein Beispiel dafür, dass man das Flussleitflüssigkeitssystem, selbst einschließlich Pumpe, am Rotorteil 30 unterbringen kann. Wenn das Flussleitflüssigkeitssystem zugleich Bestandteil des Kühlsystems der Maschine sein soll, wird sinnvollerweise für Rückkühlung der Flüssigkeit 18 gesorgt, z.B. durch einen Flüssigkeit/Luft-Wärmetauscher 66 an der Außenseite des Rotorteils 30.

Wenn man das Reservoir 64 und die nicht eingezeichnete Pumpe separat von dem Rotorteil 30 und stationär anordnen möchte, dann muss man den Kanal 62 z.B. mittels einer Drehdurchführung durch die Rotationsachse 60 nach außen hin mit der Pumpe und dem Reservoir 64 verbinden.

Anhand von Fig. 6 kann man sich auch leicht vorstellen, wie man ein komplettes Flussleitflüssigkeitssystem für den Statorteil 2 ausbilden kann. In diesem Fall werden Reservoir 64, Pumpe, Kanal 62 und ggf. Wärmetauscher 66 einfach stationär am Statorteil 2 vorgesehen.

Obwohl bei allen Ausführungsbeispielen die Füllräume entweder am Statorteil 2 oder am Rotorteil 30 vorgesehen waren, wird betont, dass es möglich ist, die Füllräume sowohl am Statorteil 2 als auch am Rotorteil 30 vorzusehen.

In aller Regel werden die wichtigsten Betriebszustände "Füllraum bzw. Füllräume voll" und "Füllraum bzw. Füllräume leer" sein. Man kann aber auch mit diskreten Zwischen-Füllungszuständen oder einer quasi-kontinuierlichen Variation der Füllungszustände arbeiten. Teilvolle Füllungszustände sind bei rotatorischen Maschinen in der Praxis am ehesten darstellbar, wenn man den Statorteil 2 oder den Rotorteil 30 umfangsmäßig in mehrere Sektoren aufteilt und jeden Sektor mit einem eigenen Zuführungskanal und ggf. Abführungskanal versieht. Insbesondere bei der vierten Ausführungsform stellt sich aufgrund der Rotationsbewegung des Rotorteils 30 selbsttätig ein über den Umfang ausgeglichener Teilfüllungszustand ein.

Wenn die Maschine ein Generator ist, geht es erfindungsgemäß nicht um die Senkung der induzierten EMK bei hoher Drehzahl, sondern um die Möglichkeit, die Drehzahlabhängigkeit der Höhe der erzeugten Spannung zu reduzieren.

## Patentansprüche

1. Dauermagnetisch erregte, elektrische Maschine, mit einem Statorteil (2) und einem Läuferteil (30), das relativ zu dem Statorteil (2) bewegbar ist, und mit einem Luftspalt (8) zwischen dem Statorteil (2) und dem Läuferteil (30), wobei eines der Teile Statorteil (2) und Läuferteil (30) eine Flusspfadanordnung für magnetischen Fluss und Wicklungsspulen (6) aufweist und das andere der Teile Statorteil (2) und Läuferteil (30) eine Flusspfadanordnung für magnetischen Fluss und Dauermagnete (36) aufweist,
und wobei im Bereich der Flusspfadanordnung des Statorteils (2) und/oder des Läuferteils (30) mindestens ein Füllraum (12; 16; 20; 38; 46; 48; 50) zur Aufnahme von Flussleitflüssigkeit (18), die für magnetischen Fluss leitfähig ist, vorgesehen ist,
**dadurch gekennzeichnet, dass** sich zur Veränderung der magnetischen Flussleitfähigkeit der Flusspfadanordnung die Menge der Flussleitflüssigkeit (18) in dem Füllraum (12; 16; 20; - 38; 46; 48; 50) während des Betriebs der Maschine in Abhängigkeit von der Drehzahl der Maschine ändern lässt.

2. Maschine nach Anspruch 1,
**dadurch gekennzeichnet, dass** die Versorgung des Füllraums mit mehr oder weniger Flussleitflüssigkeit (18) das Arbeiten mit einer Anzahl diskreter Füllungszustände des Füllraums aufweist, vorzugsweise mindestens des Füllungszustands "voll" und des Fülluhgszustands "leer".

3. Maschine nach Anspruch 1,
**dadurch gekennzeichnet, dass** die Versorgung des Füllraums mit mehr oder weniger Flussleitflüssigkeit (18) das Nutzen eines kontinuierlichen Bereichs von Füllungszuständen des Füllraums aufweist, vorzugsweise einschließlich des End-Füllungszustands "voll" und des End-Füllungszustands "leer".

4. Maschine nach einem der Ansprüche 1 bis 3,
**dadurch gekennzeichnet, dass** bei der mit Wicklungsspulen (6) versehenen Flusspfadanordnung Unterbrechungen (12) der Flusspfadanordnung als Füllräume vorgesehen sind.

5. Maschine nach einem der Ansprüche 1 bis 4,
**dadurch gekennzeichnet, dass** bei der mit Wicklungsspulen (6) versehenen Flusspfadanordnung örtliche Ausnehmungen (20) des magnetischen Flussquerschnitts als Füllräume vorgesehen sind.

6. Maschine nach einem der Ansprüche 1 bis 5,
**dadurch gekennzeichnet, dass** bei der mit Wicklungsspulen (6) versehenen Flusspfadanordnung eine unterdimensionierte Feststoff-Flusspfadanordnung und mindestens ein Füllraum zum großflächigen Hochdimensionieren der Flusspfadanordnung vorgesehen ist.

7. Maschine nach einem der Ansprüche 1 bis 6,
**dadurch gekennzeichnet, dass** bei der mit Dauermagneten (36) versehenen Flusspfadanordnung Unterbrechungen der Flusspfadanordnung als Füllräume vorgesehen sind.

8. Maschine nach Anspruch 7,
**dadurch gekennzeichnet, dass** in Umfangsrichtung magnetisierte Dauermagnete (36) und Flussleitelemente (40) jeweils zwischen zwei benachbarten Dauermagneten (36) vorgesehen sind; und dass Abstandsräume (46) zwischen Dauermagneten (36) und Flussleitelementen (40) als Füllräume vorgesehen sind.

9. Maschine nach einem der Ansprüche 1 bis 8,
**dadurch gekennzeichnet, dass** bei der mit Dauermagneten (36) versehenen Flusspfadanordnung örtliche Ausnehmungen des magnetischen Flussquerschnitts als Füllräume vorgesehen sind.

10. Maschine nach einem der Ansprüche 1 bis 9,
**dadurch gekennzeichnet, dass** bei der mit Dauermagneten (36) versehenen Flusspfadanordnung eine unterdimensionierte Feststoff-Flusspfadanordnung (32) und mindestens ein Füllraum (38) zum großflächigen Hochdimensionieren der Flusspfadanordnung vorgesehen ist.

11. Maschine nach einem der Ansprüche 1 bis 6
**dadurch gekennzeichnet, dass** in Umfangsrichtung magnetisierte Dauermagnete (36) und Flussleitelemente (40) jeweils zwischen zwei benachbarten Dauermagneten (36) vorgesehen sind; und dass an der luftspaltabgewrandten Seite der Dauermagnete (36) und der Flussleitelemente (40) mindestens ein Füllraum (50) zur wahlweisen Schaffung von magnetischem Nebenschluss vorgesehen ist.

12. Maschine nach einem der Ansprüche 1 bis 11,
**dadurch gekennzeichnet, dass** der Füllraum an einem Kreislauf der Flussleitflüssigkeit (18) angeschlossen ist.

13. Maschine nach einem der Ansprüche 1 bis 12,
**dadurch gekennzeichnet, dass** der Läuferteil (30) mindestens einen Füllraum aufweist; und dass an dem Läuferteil (30) eine Pumpe zum Fördern der Flussleitflüssigkeit (18) angeordnet ist.

14. Maschine nach einem der Ansprüche 1 bis 12,
**dadurch gekennzeichnet, dass** der Läuferteil (30) mindestens einen Füllraum aufweist; und dass eine Pumpe zum Fördern der Flussleitflüssigkeit (18) separat von dem Läuferteil angeordnet und über mindestens eine Durchführung, die Relativbewegung erlaubt, mit dem Füllraum verbunden ist.

15. Maschine nach einem der Ansprüche 1 bis 14,
**dadurch gekennzeichnet, dass** der Füllraum und die Flussleitflüssigkeit (18) zugleich Bestandteil eines Kühlsystems der Maschine sind.

## Claims

1. A permanent-magnetically excited electric machine comprising a stator part (2) and a moving part (30) movable relative to the stator part (2), as well as an air gap (8) between the stator part (2) and the moving part (30), with one of said stator part (2) and said moving part (30) having a flux path assembly for magnetic flux and winding coils (6) and the other one of said stator part (2) and said moving part (30) having a flux path assembly for magnetic flux and permanent magnets (36),
and in which in the region of the flux path assembly of the stator part (2) and/or of the moving part (30), there is provided at least one filling space (12; 16; 20; 38; 46; 48; 50) for receiving flux conduction liquid (18) that is conductive for magnetic flux,
**characterized in that**, for changing the magnetic flux conductivity of the flux path assembly, the quantity of the flux conduction liquid (18) in the filling space (12; 16; 20; 38; 46; 48; 50) may be changed during operation of the machine in dependency on the rotational speed of the machine.

2. A machine according to claim 1,
**characterized in that** supplying of more or less flux conduction liquid (18) to the filling space comprises the utilization of a number of discrete filling states of the filling space, preferably at least the filling state "full" and the filling state "empty".

3. A machine according to claim 1,
**characterized in that** supplying of more or less flux conduction liquid (18) to the filling space comprises the utilization of a continuous range of filling states of the filling space, preferably inclusive of the final filling state "full" and the final filling state "empty".

4. A machine according to any of claims 1 to 3,
**characterized in that** the flux path assembly provided with winding coils (6) is provided with interruptions (12) of the flux path assembly that serve as filling spaces.

5. A machine according to any of claims 1 to 4,
**characterized in that** the flux path assembly provided with winding coils (6) is provided with local recesses (20) of the magnetic flux cross-sectional area that serve as filling spaces.

6. A machine according to any of claims 1 to 5,
**characterized in that** the flux path assembly provided with winding coils (6) is provided with an under-dimensioned solid-material flux path assembly and at least one filling space for large-area up-dimensioning of the flux path assembly.

7. A machine according to any of claims 1 to 6,
**characterized in that** the flux path assembly provided with permanent magnets (36) is provided with interruptions of the flux path assembly that serve as filling spaces.

8. A machine according to claim 7,
**characterized in that** circumferentially magnetized permanent magnets (36) and flux conduction elements (40) are provided between two adjacent permanent magnets (36) each; and that distance spaces (46) between permanent magnets (36) and flux conduction elements (40) are provided as filling spaces.

9. A machine according to any of claims 1 to 8,
**characterized in that** the flux path assembly provided with permanent magnets (36) is provided with local recesses of the magnetic flux cross-sectional area that serve as filling spaces.

10. A machine according to any of claims 1 to 9,
**characterized in that** the flux path assembly provided with permanent magnets (36) is provided with an under-dimension solid-material flux path assembly (32) and at least one filling space (38) for large-area up-dimensioning of the flux path assembly.

11. A machine according to any of claims 1 to 6,
**characterized in that** circumferentially magnetized permanent magnets (36) and flux conduction elements (40) are provided between two adjacent permanent magnets (36) each; and that on the side of the permanent magnets (36) and the flux conduction elements (40) directed away from the air gap, there is provided at least one filling space for optionally providing a magnetic shunt.

12. A machine according to any of claims 1 to 11,
**characterized in that** the filling space is connected to a circuit of the flux conduction liquid (18).

13. A machine according to any of claims 1 to 12,
**characterized in that** the moving part (30) has at least one filling space; and that a pump for conveying the flux conduction liquid (18) is arranged on the moving part (30).

14. A machine according to any of claims 1 to 12,
**characterized in that** the moving part (30) has at least one filling space; and that a pump for conveying the flux conduction liquid (18) is arranged separately from the moving part and is connected to the filling space via at least one passageway permitting relative movement.

15. A machine according to any of claims 1 to 14,
**characterized in that** the filling space and the flux conduction liquid (18) at the same time are constituent part of a cooling system of the machine.

## Revendications

1. Machine électrique à excitation par aimant permanent, avec un élément de stator (2) et un élément de rotor (30), mobile par rapport à l'élément de stator (2) et avec un entrefer (8) entre l'élément de stator (2) et l'élément de rotor (30) sachant que l'un des éléments de stator (2) et de rotor (30) comporte un agencement de voie du flux magnétique et des bobines d'enroulement (6) et que l'autre élément des éléments de stator (2) et de rotor (30) comporte un agencement de voie du flux magnétique et des aimants permanents (36),
un espace de remplissage (12; 16; 20; 38; 46; 48; 50) étant prévu dans la zone de l'agencement de voie du flux de l'élément de stator (2) et/ou de l'élément de rotor (30) pour la réception du liquide de conductibilité (18), conducteur pour le flux magnétique,
**caractérisée en ce que**, pour la transformation de la conductibilité de l'agencement de voie du flux, la quantité de liquide conducteur (18) dans l'espace de remplissage (12; 16; 20; - 38; 46; 48; 50) peut être modifiée pendant le fonctionnement de la machine en fonction de la vitesse de rotation de la machine.

2. Machine selon la revendication 1, **caractérisée en ce que** l'alimentation de l'espace de remplissage avec plus ou moins de liquide conducteur de flux (18) permet le fonctionnement avec un nombre d'états de remplissage discrets de l'espace de remplissage, de préférence au moins de l'état de remplissage « plein » et de l'état de remplissage « vide ».

3. Machine selon la revendication 1, **caractérisée en ce que** l'alimentation de l'espace de remplissage avec plus ou moins de liquide conducteur de flux (18) comporte l'utilisation d'une zone continue d'états de remplissage de l'espace de remplissage, de préférence y compris l'état final de remplissage « plein » et de l'état final de remplissage « vide ».

4. Machine selon l'une des revendications 1 à 3, **caractérisée en ce que** dans l'agencement de voie du flux équipé de bobines d'enroulements (6) des interruptions (12) de l'agencement de voie du flux sont prévues comme espaces de remplissage.

5. Machine selon l'une des revendications 1 à 4, **caractérisée en ce que** dans l'agencement de voie du flux équipé de bobines d'enroulements (6) des évidements locaux (20) de la section transversale du flux magnétique sont prévues comme espaces de remplissage.

6. Machine selon l'une des revendications 1 à 5, **caractérisée en ce que** dans l'agencement de voie du flux équipé de bobines d'enroulements (6) un agencement de voie du flux en phase solide sous-dimensionné et au moins un espace de remplissage sont prévus pour dimensionner de façon étendue à une grande échelle l'agencement de la voie du flux.

7. Machine selon l'une des revendications 1 à 6, **caractérisée en ce que** dans l'agencement de voie du flux équipé d'aimants permanents (36) des interruptions de l'agencement de voie du flux sont prévues comme espaces de remplissage.

8. Machine selon la revendication 7, **caractérisée en ce que** des aimants permanents (36), magnétisés dans le sens périphérique, et des éléments conducteurs de flux (40) sont prévus chaque fois entre les aimants permanents adjacents ; et **en ce que** des compartiments d'espacement (46) sont prévus entre les aimants permanents (36) et les éléments conducteurs de flux (40) comme espaces de remplissage.

9. Machine selon l'une des revendications 1 à 8, **caractérisée en ce que** dans l'agencement de voie du flux équipé d'aimants permanents (36) des évidements locaux de la section transversale du flux magnétique sont prévues comme espaces de remplissage.

10. Machine selon l'une des revendications 1 à 9, **caractérisée en ce que** dans l'agencement de voie du flux équipé d'aimants permanents, un agencement de voie du flux en phase solide sous-dimensionné (32) et au moins un espace de remplissage (38) sont prévus pour dimensionner de façon étendue à une grande échelle l'agencement de voie du flux.

11. Machine selon l'une des revendications 1 à 6, **caractérisée en ce que** des aimants permanents (36), magnétisés dans le sens périphérique et des éléments conducteurs de flux (40) sont prévus chaque fois entre les aimants permanents adjacents ; et **en ce que** du côté opposé à l'entrefer des aimants permanents (36) et des éléments conducteurs de flux (40), au moins un espace de remplissage (50) est prévu pour la création en option d'une dérivation magnétique.

12. Machine selon l'une des revendications 1 à 11, **caractérisée en ce que** l'espace de remplissage est raccordé à un cycle de liquide conducteur de flux (18)

13. Machine selon l'une des revendications 1 à 12, **caractérisée en ce que** l'élément de rotor (30) comporte au moins un espace de remplissage ; et que sur l'élément de rotor (30) une pompe est disposée pour déplacer le liquide conducteur de flux (18).

14. Machine selon l'une des revendications 1 à 12, **caractérisée en ce que** l'élément de rotor (30) comporte au moins un espace de remplissage ; et qu'une pompe est disposée séparément de l'élément de rotor pour déplacer le liquide conducteur de flux (18) et est relié à l'espace de remplissage par au moins une traversée qui permet un mouvement relatif.

15. Machine selon l'une des revendications 1 à 14, **caractérisée en ce que** l'espace de remplissage et le liquide conducteur de flux (18) sont en même temps des composants d'un système de refroidissement de la machine.
